# EUROPEAN PATENT SPECIFICATION

(11) **EP 2 284 607 B1**
(45) Date of publication and mention of the grant of the patent: **10.09.2014**
(21) Application number: 10171123.2
(22) Date of filing: 28.07.2010
(51) Int. Cl.: G03B 21/16

(54) **Projector and Control Method**
Projektor und Steuerverfahren
Projecteur et procédé de contrôle

(30) Priority: 31.07.2009 JP 2009178616
(43) Date of publication of application: 16.02.2011
(73) Proprietor: Seiko Epson Corporation, Shinjuku-ku Tokyo (JP)
(72) Inventor: Karasawa, Yukihiro, Suwa-shi Nagano 392-8502 (JP)
(74) Representative: Cloughley, Peter Andrew

(56) References cited:
- EP-A1- 0 923 237
- EP-A1- 1 640 798
- JP-A- 4 147 291
- JP-A- 2005 115 220
- US-A1- 2004 239 887
- US-A1- 2004 263 801
- US-B1- 6 322 218

## Description

The present invention relates to a projector, a computer program, an information storage medium, and a cooling control method.

For example, JP-A-2005-121712 discloses a rear projector that detects, when a main switch of the rear projector is turned off, temperature using a first temperature sensor for detecting the temperature of an optical device having a liquid crystal panel or the like and a second temperature sensor for detecting the temperature of the air around the optical device and controls, while maintaining a state in which the temperature of the air around the optical device is equal to or lower than the temperature of the optical device, a cooling device having a Peltier element such that the temperatures fall to about the room temperature.

However, when a dimming section is provided between a light source and the optical device, in order to prevent moisture condensation, the projector needs to control the cooling device not only when the main switch is turned off but also when light is blocked by the dimming section.

JP 4-147291 discloses a cooling fan for a liquid crystal light valve and a cooling fan for a light source that are separately provided. The fan for the light valve is turned on/off so as to be synchronized with the ON/OFF of the light source by a cooling control circuit. At the time of illuminating the light source, the rotation speed control for the fans is executed corresponding to the output of a temperature sensor. Also, the fan is controlled so that it is forced to actuate at a maximum number of rotations while synchronizing the OFF of the light source.

EP 1640798 discloses a projection type video display having a shutter device that can switch between a state where illuminating light from a lamp of an illuminating device is blocked (referred to as a closing state of the shutter device) and a state where illuminating light passes through (referred to as an opening state of the shutter device). A system control circuit instructs a panel cooling fan power source to decrease a fan rotation speed, when receiving information indicating that the shutter device is in the closing state from the detecting portion. After receiving this instruction, the panel fan power source decreases power supplied to the panel cooling fan.

EP 0923237 discloses a device for cooling a display apparatus including a fan, a temperature sensor and a control signal generator for controlling the fan. An integrator circuit evaluates the video signal fed to the display, and has its output connected to the control signal generator. The control signal generator circuit includes a comparator which compares the signal from the integrator with a threshold.

US 2004/239887 discloses an image projector comprising a discharge lamp, image projecting means for displaying an image on a screen by emitting light from the discharge lamp, and electric power regulating means for regulating the electric power supplied to the discharge lamp. The projector also has a cooling fan for reducing the temperature of the discharge lamp or the image projecting means, a cooling fan controlling means for controlling the rotation of the cooling fan, and a sensor for detecting a temperature of the discharge lamp or the image projecting means. The rotation of the cooling fan is stopped when the image projector is in a standby mode. In the standby mode, the cooling fan controlling means controls the rotation speed of the cooling fan based on the detected temperature.

US 6,322,218 discloses a projection type display using a transmission type liquid crystal light valve, comprising liquid crystal light valves arranged in a body which modulate and emit an incident light from the lamp. The display includes fans for cooling the inside of the body, a temperature detecting element for detecting the temperature in the vicinity of the liquid crystal light valve and a control unit for controlling rotational frequencies of the fans and for controlling on/off of a power source of the lamp based on a compensated temperature after compensating the temperature detected by the temperature detecting element by a predetermined temperature compensation value.

US 2004/263801 discloses a projection type video display including a video signal processing circuit that inputs a video signal to perform processing such as frequency conversion as well as processing for generating data representing the APL (Average Picture Level) of a frame video for each frame period. A microcomputer functions as a dimmer arithmetic block to perform processing for generating dimmer data upon receipt of APL data, and functions as a lamp driver control block to perform processing for sending out a dimmer command to a lamp driver. The lamp driver receives the dimmer command, to control an amount of light emitted from a light source (a lamp).

An advantage of some aspects of the invention is to provide a projector, a computer program, an information storage medium, and a cooling control method that can appropriately prevent occurrence of moisture condensation by controlling a cooling device having a Peltier element.

According to an aspect of the invention, there is provided a projector as defined in claim 1.

According to the aspect of the invention, the projector appropriately cools the light modulating device according to the light amount of the illumination light. Therefore, it is possible to prevent moisture condensation due to overcooling from occurring when the light amount of the illumination light is stall.

With such a configuration, it is possible to perform cooling corresponding to the temperature of the light modulating device and more appropriately prevent occurrence of moisture condensation.

With such a configuration, even when a light source with many limitations on control of a light amount such as a discharge lamp is used, it is possible to relatively freely control the light amount of the illumination light.

With such a configuration, when an optical path is closed in a state in which the light source is on, since an amount of light passing through the optical path is limited to be equal to or smaller than the predetermined value by the dimming section and the light passed through the dimming section is blocked by the opening and closing section, it is possible to disperse thermal energy of the light emitted from the light source to the entire dimming device and cause the dimming device to absorb the thermal energy. In other words, since thermal damage to the opening and closing section can be reduced compared with thermal damage suffered by the opening and closing section when the optical path is closed by using only the opening and closing section, it is possible to reduce cost for the dimming device.

The projector according to the aspect may further include a second temperature measuring section that measures second temperature that is the temperature on the outside of the light modulating device. The cooling device may cool, when the first temperature is lower than the second temperature, the light modulating device such that the first temperature rises to be equal to or higher than the second temperature. With such a configuration, since the temperature of a main body of the light modulating device is kept at temperature equal to or higher than the temperature around the light modulating device, it is possible to improve the effect of preventing occurrence of moisture condensation.

In the projector according to the aspect, the cooling device may suppress the cooling of the light modulating device when the light amount of the illumination light is a minimum. With such a configuration, since the cooling of the light modulating device by the cooling device is suppressed when the illumination light that reaches the light modulating device is a minimum, it is possible to prevent moisture condensation in the light modulating device.

The projector according to the aspect may further include an operation section that receives an instruction for image mute for hiding an image based on the image signal. The illumination device may suppress the light amount of the illumination light when the operation section receives the instruction for image mute. With such a configuration, since the light amount of the illumination light is suppressed during the image mute, it is possible to suppress an amount of consumption of electric power by the illumination device.

In the projector according to the aspect, the illumination device may release the suppression of the light amount of the illumination light when the instruction for image mute is cancelled. With such a configuration, since the suppression of the light amount of the illumination light is released in association with the cancellation of the image mute, it is possible to quickly enjoy an image based on the input image signal.

In the projector according to the aspect, the cooling device may suppress the cooling of the light modulating device when the instruction for image mute is received. With such a configuration, since cooling device suppresses the cooling of the light modulating device when the projector is set in the image mute, it is possible to appropriately prevent occurrence of moisture condensation due to a fall in the temperature of the light modulating device! involved in a reduction in the light amount of the illumination light during the image mute.

In the projector according to the aspect, the cooling device may release the suppression of the cooling of the light modulating device when the instruction for image mute is cancelled, With such a configuration, since the cooling device releases the suppression of the cooling of the light modulating device in association with the illumination device releasing the suppression of the light amount of the illumination light according to the cancellation of the image mute, it is possible to appropriately cool the light modulating device.

In the projector according to the aspect, the cooling device may include: a refrigerant pipe in which a refrigerant is encapsulated; and a heat exchange unit that lowers the temperature of the refrigerant encapsulated in the refrigerant pipe. With such a configuration, it is possible to provide a projector that more efficiently cools the light modulating device compared with an air cooling system by a cooling fan.

In the projector according to the aspect, the heat exchange unit of the cooling device may include: a Peltier element disposed to be thermally conductible to the refrigerant pipe, the Peltier element absorbing heat of the refrigerant; and a cooling fin that radiates the heat absorbed by the Peltier element. With such a configuration, it is possible to efficiently radiate the heat deprived from the refrigerant that circulates in the refrigerant pipe.

According to another aspect of the invention, there is provided a control method as defined in claim 6.

Besides the aspects of the projector and the control method for the projector, the invention may be configured as a computer program for realizing the control method with a computer included in the projector. Further, the invention may be configured as a recording medium having the computer program recorded thereon.

Embodiments of the invention will now be described by way of example only with reference to the accompanying drawings, wherein like numbers reference like elements.

Fig. 1 is a functional block diagram of a projector in a first embodiment.

Fig. 2 is a schematic plan sectional view of the projector in the first embodiment.

Fig. 3 is a diagram for explaining the operation of a dimming device in the first embodiment.

Fig. 4 is a diagram for explaining the operation of an opening and closing device in the first embodiment.

Fig. 5 is a functional block diagram of a cooling device in the first embodiment.

Fig. 6 is a diagram of a path of a refrigerant pipe in the first embodiment.

Fig. 7 is a flowchart for explaining a control procedure in the first embodiment.

Fig. 8 is a functional block diagram of a projector in a second embodiment.

Fig. 9 is a flowchart for explaining a control procedure in the second embodiment.

Embodiments in which the invention is applied to a projector are explained below with reference to the accompanying drawings. The embodiments explained below by no means limit the content of the invention described in claims. All components described in the embodiments are not always essential as solving means of the invention described in claims.

### First Embodiment

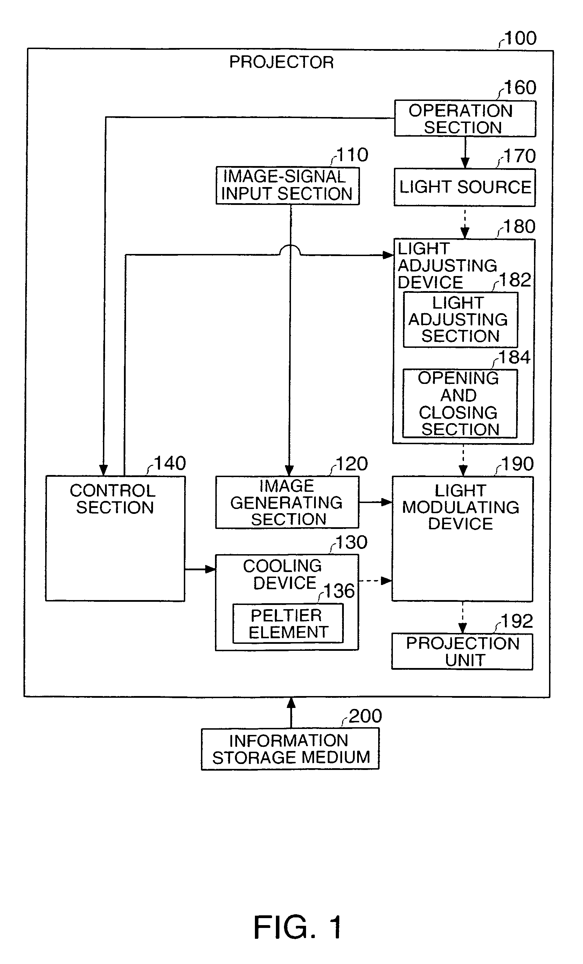

Fig. 1 is a functional block diagram of a projector 100 in a first embodiment. The projector 100 includes an operation section 160, a light source 170, a light modulating device 190 that modulates light from the light source 170 according to an image signal, a cooling device 130 having a Peltier element 136 connected thermally conductible to the light modulating device 190, a dimming device 180 provided between the light source 170 and the light modulating device 190, and a control section 140 that controls the dimming device 180 and controls the cooling device 130 according to a control state of the dimming device 180 to thereby adjust the temperature of the light modulating device 190. The light source 170 and the dimming device 180 respectively correspond to the light source and the dimming device included in the illumination device of this aspect of the invention.

The dimming device 180 includes a dimming section 182 that moves plural baffles to the inside and the outside of an optical path to thereby adjust an amount of light that passes through the optical path and an opening and closing section 184 that moves one baffle to the inside and the outside of the optical path to thereby open and close the optical path.

The projector 100 further includes an image-signal input section 110 that receives input of an image signal (e.g., an RGB signal) from a PC (Personal Computer) or the like, an image generating section 120 that generates an image on the basis of the image signal, and a projection unit 192 that projects the image.

The projector 100 may function as these sections using hardware explained below. For example, in the projector 100, an image input terminal, a converter, or the like may be used as the image-signal input section 110, an image processing circuit or the like may be used as the image generating section 120, a CPU or the like may be used as the control section 140, a remote controller, operation buttons, or the like may be used as the operation section 160, and a projection lens or the like including a zoom lens may be used as the projection unit 192. Details of the cooling device 130, the light source 170, the dimming device 180, and the light modulating device 190 are explained later.

The computer of the projector 100 may read a computer program stored in an information storage medium 200 and function as the control section 140 or the like. As such an information storage medium 200, for example, a CD-ROM, a DVD-ROM, a ROM, a RAM, an HDD, or the like can be applied.

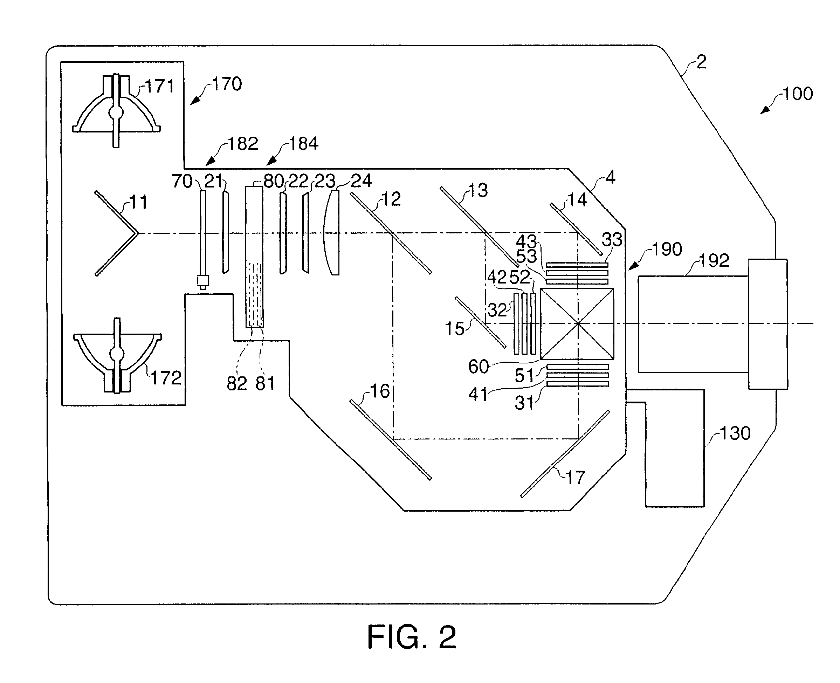

A flow of light in the projector 100 is explained. Fig. 2 is a schematic plan sectional view of the projector 100 in the first embodiment. In the projector 100, an optical component housing 4, the cooling device 130, the projection unit 192, and the like are housed in a housing 2. The optical component housing 4 houses the light source 170, the dimming section 182, the opening and closing section 184, the light modulating device 190, and the like.

The light source 170 includes two light source devices 171 and 172. Lights from the light source devices 171 and 172 are reflected by a reflection mirror 11 and output to a color separation optical system through a dimming mechanism 70, a first lens array 21, an opening and closing mechanism 80, a second lens array 22, a polarization conversion element 23, and a superimposing lens 24.

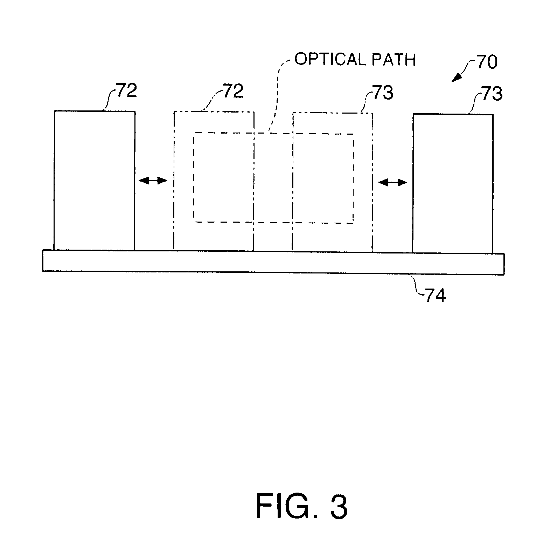

The dimming mechanism 70 and the opening and closing mechanism 80 are explained more in detail below. Fig. 3 is a diagram for explaining the operation of the dimming mechanism 70 in the first embodiment. The dimming mechanism 70 is a part of the dimming section 182 and includes baffles 72 and 73 and a supporting member 74 that slidably supports the baffles 72 and 73. The baffles 72 and 73 are driven by a not-shown motor according to control information received from the control section 140. A rectangular area indicated by a broken line in the figure represents a section of an optical path of light made incident on the dimming mechanism 70.

For example, when controlled to be opened, the baffles 72 and 73 move to positions where the baffles 72 and 73 do not block the optical path. When controlled to be closed, the baffles 72 and 73 move to positions where the baffles 72 and 73 block a part of the optical path while being spaced apart from each other.

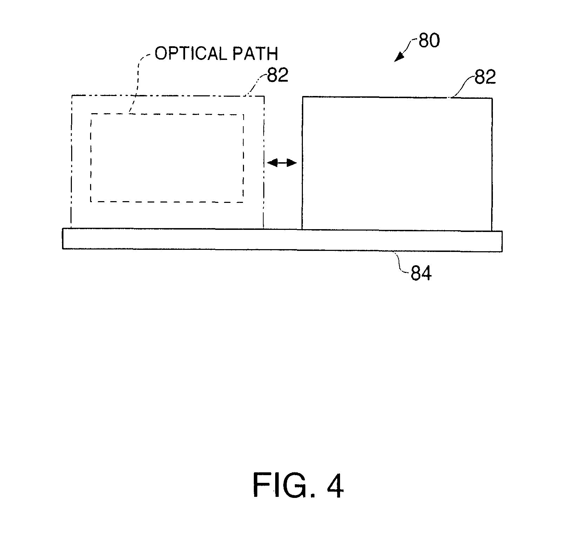

Fig. 4 is a diagram for explaining the operation of the opening and closing mechanism 80 in the first embodiment. The opening and closing mechanism 80 is a part of the opening and closing section 184 and includes a filter 81, a baffle 82, and a supporting member 84 that movably supports the filter 81 and the baffle 82. The filter 81 and the baffle 82 are driven by a not-shown motor according to control information received from the control section 140. The filter 81 is a filter for changing colors and brightness of an image according to a set color mode or the like. A rectangular area indicated by a broken line in the figure represents a section of an optical path of light made incident on the opening and closing mechanism 80.

For example, when controlled to be opened, the baffle 82 moves to a position where the baffle 82 does not block the optical path. When controlled to be closed, the baffle 82 moves to a position where the baffle 82 blocks the entire optical path.

A color separation optical system housed in the optical component housing 4 includes a dichroic mirror 12 that separates R light, reflection mirrors 16 and 17 that reflect the R light and lead the R light to a liquid crystal panel 41 for R light, a dichroic mirror 13 that separates light, from which the R light is separated, into G light and B light, a reflection mirror 15 that reflects the G light and leads the G light to a liquid crystal panel 42 for G light, and a reflection mirror 14 that reflects the B light and leads the B light to a liquid crystal panel 43 for B light.

A color combination optical system housed in the optical component housing 4 includes an incidence-side sheet polarizer 31 for R light, the liquid crystal panel 41, an emission-side sheet polarizer 51, an incidence-side sheet polarizer 32 for G light, the liquid crystal panel 42, an emission-side sheet polarizer 52, an incidence-side sheet polarizer 33 for B light, the liquid crystal panel 43, an emission-side sheet polarizer 53, and a cross dichroic prism 60 that combines the R light, the G light, and the B light transmitted through the emission-side sheet polarizers 51 to 53 and outputs combined light to the projection unit 192. The color combination optical system is a part of the light modulating device 190.

The cooling device 130 is formed to be thermally conductible to the light modulating device 190. The cooling device 130 is explained more in detail below.

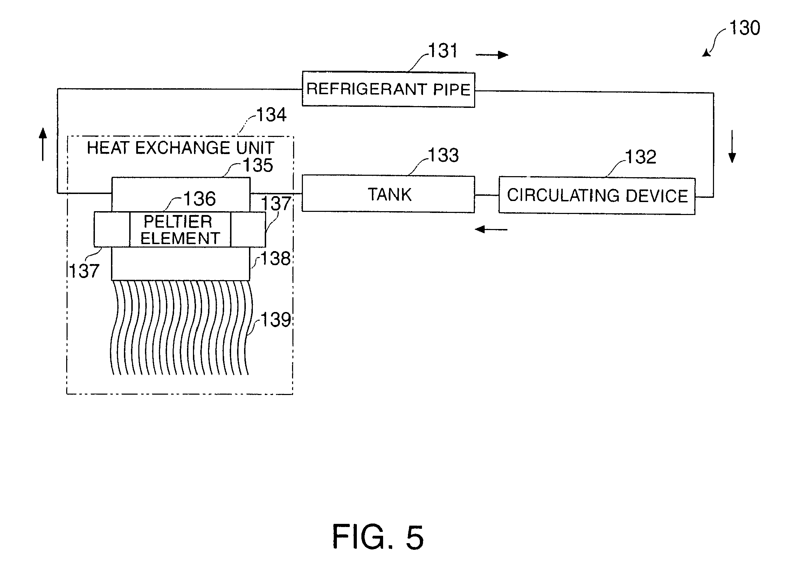

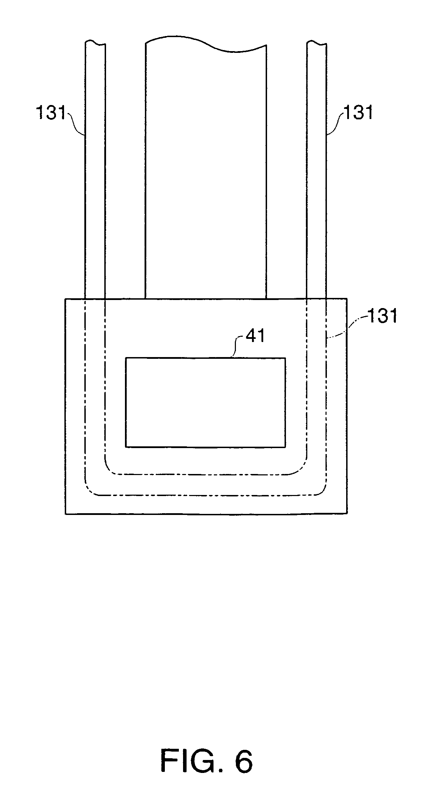

Fig. 5 is a functional block diagram of the cooling device 130 in the first embodiment. Fig. 6 is a diagram of a path of a refrigerant pipe 131 in the first embodiment.

The cooling device 130 includes the refrigerant pipe 131 in which a refrigerant is encapsulated, a circulating device 132 that circulates the refrigerant encapsulated in the refrigerant pipe 131, a tank 133 that temporarily stores the refrigerant, and a heat exchange unit 134 that adjusts the temperature of the refrigerant. The refrigerant pipe 131 is disposed to be thermally conductible to the liquid crystal panels 41 to 43. The refrigerant that absorbs heat from the liquid crystal panels 41 to 43 is sent to the heat exchange unit 134 by the circulating device 132 driven by electric power supplied from a not-shown power supply.

The heat exchange unit 134 includes a Peltier element 136, a partition plate 137 that supports the Peltier element 136, a heat exchanging section 135 provided on a heat absorption side of the Peltier element 136, and a plate member 138 and a fin member 139 provided on a heat radiation side of the Peltier element 136. The Peltier element 136 is electrically driven, heat is absorbed from the refrigerant, and the heat is radiated, whereby the refrigerant is cooled and sections around the liquid crystal panels 41 to 43 are cooled.

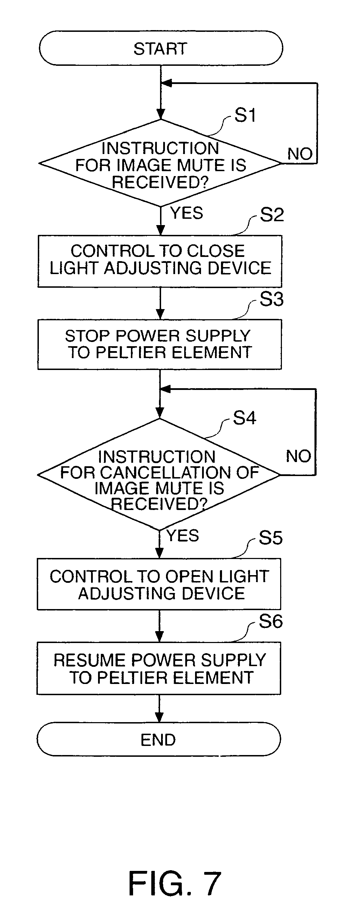

A procedure for cooling the light modulating device 190 using the cooling device 130 and the like is explained below. Fig. 7 is a flowchart for explaining a cooling procedure in the first embodiment.

A user temporarily stops projection of an image by the projector 100 by pressing an image mute button of a remote controller. Specifically, when the projector 100 receives an instruction for image mute, the projector 100 temporarily hides an image based on an input image. The control section 140 determines, on the basis of information received from the operation section 160, whether the instruction for image mute is received (step S1).

When the instruction for image mute is received, the control section 140 controls the dimming section 182 and the opening and closing section 184 and moves the baffles 72, 73, and 82 to closed positions indicated by alternate long and short dashes lines in Figs. 3 and 4, i.e., closes the dimming device 180 to suppress a light amount of illumination light (step S2). The control section 140 controls the cooling device 130 and stops power supply to the Peltier element 136 to suppress cooling of the light modulating device 190 (step S3).

The projector 100 can suppress, by stopping the power supply to the Peltier element 136, a temperature fall around the liquid crystal panels 41 to 43 in the case of blocking of light by the baffles 72, 73, and 82 because the refrigerant circulates around the liquid crystal panels 41 to 43 without heat thereof being absorbed.

The user resumes display of the image by the projector 100 by pressing the image mute button of the remote controller again. The control section 140 determines, on the basis of information received from the operation section 160, whether an instruction for cancellation of image mute is received (step S4).

When the operation section 160 receives the instruction for cancellation of image mute, the control section 140 controls the dimming section 182 and the opening and closing section 184 and moves the baffles 72, 73, and 82 to open positions indicated by solid lines in Figs. 3 and 4, i.e., opens the dimming device 180 to release the suppression of the light amount of the illumination light (step S5). The control section 140 controls the cooling device 130 and resumes the power supply to the Peltier element 136 to release the suppression of the cooling of the light modulating device 190 (step S6).

The projector 100 lowers the temperature of the refrigerant again by resuming the power supply to the Peltier element 136. It is possible to suppress a temperature rise around the liquid crystal panels 41 to 43 without suppressing the light amount of the illumination light because the cooled refrigerant circulates through the refrigerant pipe 131 laid around the liquid crystal panels 41 to 43.

As explained above, according to this embodiment, the projector 100 can more appropriately prevent occurrence of moisture condensation in the light modulating device 190 by controlling the cooling device 130 having the Peltier element 136 according to an adjustment state of the dimming device 180.

According to this embodiment, the projector 100 can prevent occurrence of moisture condensation in the light modulating device 190 by stopping the operation of the Peltier element 136 when the dimming section 182 is closed.

According to this embodiment, the projector 100 can prevent occurrence of moisture condensation in the light modulating device 190 by stopping the operation of the Peltier element 136 when the opening and closing section 184 is completely closed. According to this embodiment, since the plural baffles 72 and 73 are arranged spaced apart from each other in front of one baffle 82 that completely blocks the optical path, the projector 100 can reduce an amount of light irradiated on the baffle 82. Therefore, it is possible to suppress a temperature rise on the baffle 82.

### Second Embodiment

In the first embodiment, the projector 100 controls the cooling device 130 according to the instruction for image mute. However, the projector 100 may control the cooling device 130 according to the temperature of the light modulating device 190.

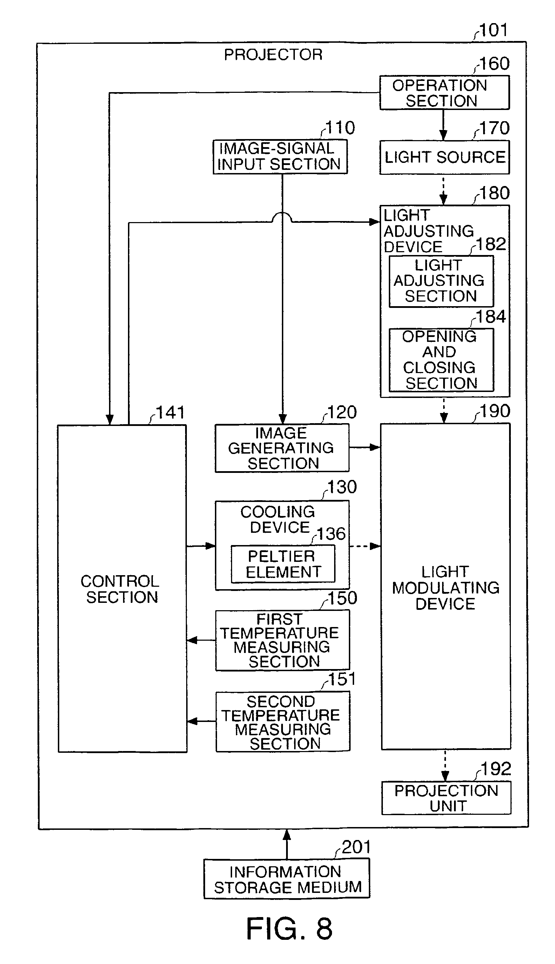

Fig. 8 is a functional block diagram of a projector 101 according to a second embodiment. The projector 101 includes, in addition to the components of the projector 100, a first temperature measuring section 150 that measures first temperature that is the temperature of the light modulating device 190 and a second temperature measuring section 151 that measures second temperature that is the temperature on the outside of the light modulating device 190.

A control section 141 controls, when the first temperature is lower than the second temperature, the cooling device 130 such that the first temperature rises to be equal to or higher than the second temperature. As in the first embodiment, the projector 101 may read a computer program from an information storage medium 201 and function as the control section 141 or the like.

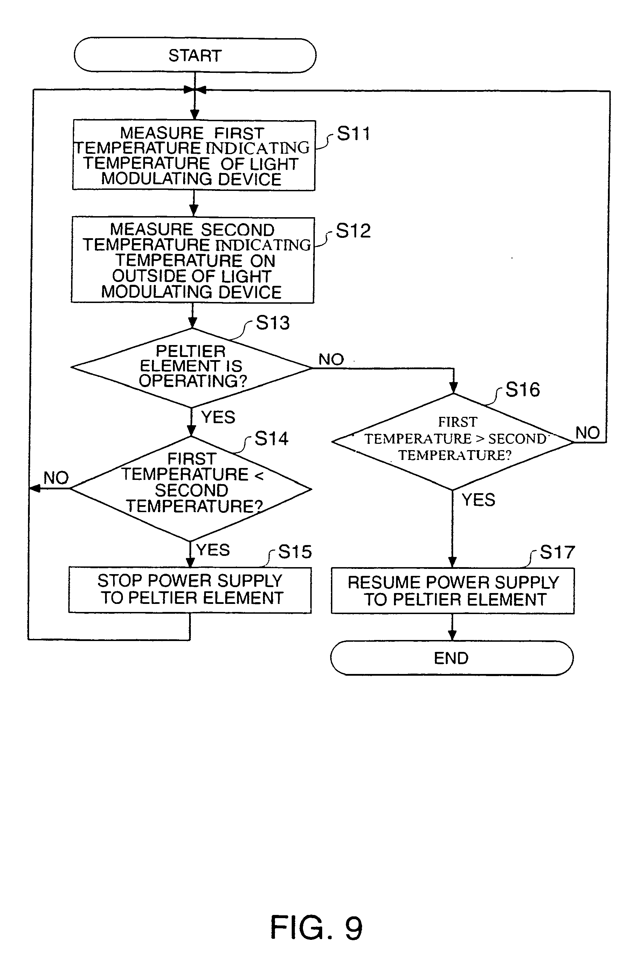

A procedure for cooling control by the control section 141 and the like is explained below. Fig. 9 is a flowchart for explaining a control procedure in the second embodiment. The first temperature measuring section 150 measures first temperature indicating the temperature of the light modulating device 190 (step S11). The second temperature measuring section 151 measures second temperature indicating the temperature on the outside of the light modulating device 190 (step S12).

The control section 141 determines whether the Peltier element 136 is operating (step S13). When the Peltier element 136 is operating, the control section 141 determines whether the first temperature is lower than the second temperature (step S14).

When the first temperature is lower than the second temperature, the control section 141 controls the cooling device 130 to stop power supply to the Peltier element 136 (step S15). Consequently, the operation of the Peltier element 136 is stopped. When the first temperature is equal to or higher than the second temperature, the power supply to the Peltier element 136 is continued.

When the operation of the Peltier element 136 is stopped, the control section 141 determines whether the first temperature is equal to or higher than the second temperature (step S16). When the first temperature is equal to or higher than the second temperature, the control section 141 controls the cooling device 130 to resume the power supply to the Peltier element 136 (step S17). Consequently, the Peltier element 136 operates.

As in the first embodiment, the control section 141 controls the cooling device 130 according to an adjustment state of the dimming device 180.

As explained above, according to this embodiment, the projector 101 realizes actions and effects same as those in the first embodiment. According to this embodiment, the projector 101 can prevent occurrence of moisture condensation in the light modulating device 190 by controlling the cooling device 130 such that the temperature of the light modulating device 190 rises to be equal to or higher than the temperature on the outside.

### Other Embodiments

The application of the invention is not limited to the embodiments explained above. Various modifications of the embodiments are possible. For example, in the second embodiment, the projector 101 includes the second temperature measuring section 151. However, the second temperature measuring section 151 is not essential.

For example, when the first temperature measured by the first temperature measuring section 150 is lower than reference temperature (e.g., 0 degree or 10 degrees) at which moisture condensation occurs, the control section 141 may control the cooling device 130 such that the first temperature rises to be equal to or higher than the reference temperature.

Therefore, the projector 101 can prevent occurrence of moisture condensation in the light modulating device 190 by controlling the cooling device 130 such that the temperature of the light modulating device 190 rises to be equal to or higher than the reference temperature.

As the control for preventing moisture condensation, instead of the control for stopping the power supply to the Peltier element 136, the control section 141 may reverse a flow of heat in the Peltier element 136 and heat the refrigerant by reversing the direction of electric current flowing to the Peltier element 136.

In the example explained in the embodiments, the circulating device 132 circulates the refrigerant through the refrigerant pipe 131 even while the power supply to the Peltier element 136 is stopped. However, the power supply to the circulating device 132 may be stopped when a predetermined time elapses after the power supply to the Peltier element 136 is stopped. The power supply to the circulating device 132 may be stopped when there is no temperature difference between the refrigerant and the light modulating device 190. With such a configuration, it is possible to save electric power consumed by the cooling device 130 while a light amount of illumination light made incident on the liquid crystal panels is suppressed, for example, during image mute.

A driving system for the baffles 72, 73, and 82 is not limited to the slide driving system and may be, for example, a rotation driving system. The dimming device 180 may include one of the dimming section 182 and the opening and closing section 184. The filter 81 in the opening and closing mechanism 80 is not essential.

As the control corresponding to a control state of the dimming device 180, the control sections 140 and 141 may perform control corresponding to not only the open state and the closed state but also, for example, transmittance in the dimming device 180 (e.g., control for stopping the cooling by the cooling device 130 when transmittance of light in the dimming device 180 is equal to or lower than a reference value). In the embodiments, as the dimming section 182 and the opening and closing section 184, the dimming section and the opening and closing section that mechanically move the positions of the baffles are explained as an example. However, the dimming section and the opening and closing section can be respectively replaced with light modulating elements such as liquid crystal panels.

In Fig. 2, the two light source devices 171 and 172 are provided as the light source 170. However, the light source 170 may be one light source device or may be three or more light source devices. The projectors 100 and 101 are 3CCD liquid crystal projectors but may be 1 CCD liquid crystal projectors.

The projectors 100 and 101 are not limited to liquid crystal projectors (a transmission type or a reflection type such as LCOS) and may be, for example, projectors employing digital micro-mirror devices. The functions of the projectors 100 and 101 may be distributed to plural apparatuses (e.g., a PC and a projector).

The foregoing description has been given by way of example only and it will be appreciated by a person skilled in the art that further modifications can be made without departing from the scope of the present invention.

## Claims

1. A projector (100) comprising:
an illumination device (170) that emits illumination light:
a light modulating device (190) that modulates the illumination light on the basis of an input image signal;
a cooling device (130) that cools the light modulating device (190) according to a light amount of the illumination light; and
a first temperature measuring section (150) that measures a first temperature, which is the temperature of the light modulating device (190),
wherein when the first temperature is lower than a reference temperature at which moisture condensation occurs, the cooling device (130) cools the light modulating device (190) such that the first temperature rises to be equal to or higher than the reference temperature,
wherein the illumination device (170) includes:
a light source (171, 172) that emits light; and
a dimming device (180) that emits, as the illumination light, light obtained by adjusting an amount of the light emitted by the light source (171, 172),
**characterized in that** the dimming device (180) includes:
a dimming section (182) provided between the light source (171, 172) and the light modulating device (190), the light from the light source (171, 172) being made incident on the dimming section (182); and
an opening and closing section (184) provided between the dimming section (182) and the light modulating device (190) and provided such that the light adjusted by the dimming section (182) is made incident on the opening and closing section (184), and
wherein when the light amount of the illumination light is minimized, the illumination device (170) drives the dimming section (182) such that an amount of light passing through the dimming section (182) decreases to be equal to or smaller than a predetermined value and closes the opening and closing section (184).

2. The projector (100) according to claim 1, further comprising a second temperature measuring section (151) that measures a second temperature, which is the temperature on an outside of the light modulating device (190), wherein
when the first temperature is lower than the second temperature, the cooling device (130) cools the light modulating device (190) such that the first temperature rises to be equal to or higher than the second temperature.

3. The projector (100) according to claim 1 or claim 2, wherein the cooling device (130) suppresses the cooling of the light modulating device (190) when the light amount of the Illumination light is a minimum.

4. The projector (100) according to any of claims 1 to 3, wherein the cooling device (130) suppresses the cooling of the light modulating device (190) when an instruction for image mute is received.

5. The projector (100) according to claim 4, wherein the cooling device (130) releases the suppression of the cooling of the light modulating device (190) when the instruction for image mute is cancelled.

6. A control method for a projector (100) including an illumination device (170), a light modulating device (190), and a cooling device (130),
wherein the illumination device (170) of the projector (100) includes:
a light source (171, 172) that emits light; and
a dimming device (180) that emits, as the illumination light, light obtained by adjusting an amount of the light emitted by the light source (171, 172),
wherein the dimming device (180) includes:
a dimming section (182) provided between the light source (171, 172) and the light modulating device (190), the light from the light source (171, 172) being made incident on the dimming section (182); and
an opening and closing section (184) provided between the dimming section (182) and the light modulating device (190) and provided such that the light adjusted by the dimming section (182) is made incident on the opening and closing section (184),
the control method comprising:
causing the illumination device (170) to emit illumination light;
causing the light modulating device (190) to modulate the illumination light on the basis of an input image signal;
causing the cooling device (130) to cool the light modulating device (190) according to a light amount of the illumination light:
measuring a first temperature, which is the temperature of the light modulating device (190);
when the first temperature is lower than a reference temperature at which moisture condensation occurs, causing the cooling device (130) to cool the light modulating device (190) such that the first temperature rises to be equal to or higher than the reference temperature; and **characterized by**
when the light amount of the illumination light is minimized, driving the dimming section (182) such that an amount of light passing through the dimming section (182) decreases to be equal to or smaller than a predetermined value and closing the opening and closing section (184).

7. The control method according to claim 6, further comprising:
measuring a second temperature, which is the temperature on an outside of the light modulating device (190); and
when the first temperature is lower than the second temperature, causing the cooling device (130) to cool the light modulating device (190) such that the first temperature rises to be equal to or higher than the second temperature.

8. The control method according to claim 6 or claim 7, further comprising causing the cooling device (130) to suppress the cooling of the light modulating device (190) when the light amount of the illumination light is a minimum.

9. The control method according to any of claims 6 to 8, further comprising causing the cooling device (130) to suppress the cooling of the light modulating device when an instruction for image mute is received.

10. The control method according to claim 9, further comprising causing the cooling device (130) to release the suppression of the cooling of the light modulating device (190) when the instruction for image mute is cancelled.

## Patentansprüche

1. Projektor (100), umfassend:
eine Beleuchtungsvorrichtung (170), die Beleuchtungslicht ausstrahlt;
eine Lichtmodulationsvorrichtung (190), die das Beleuchtungslicht auf der Basis eines Eingangsbildsignals moduliert;
eine Kühlvorrichtung (130), die die Lichtmodulationsvorrichtung (190) gemäß einer Lichtmenge des Beleuchtungslichts kühlt; und
einen ersten Temperaturmessabschnitt (150), der eine erste Temperatur misst, die die Temperatur der Lichtmodulationsvorrichtung (190) ist,
wobei, wenn die erste Temperatur niedriger als eine Referenztemperatur ist, bei der eine Feuchtigkeitskondensation eintritt, die Kühlvorrichtung (130) die Lichtmodulationsvorrichtung (190) so kühlt, dass die erste Temperatur so steigt, dass sie gleich oder höher als die Referenztemperatur ist,
wobei die Beleuchtungsvorrichtung (170) enthält:
eine Lichtquelle (171, 172), die Licht ausstrahlt; und
eine Verdunklungsvorrichtung (180), die als Beleuchtungslicht Licht ausstrahlt, das durch Einstellen einer Menge des Lichts erhalten wird, das von der Lichtquelle (171, 172) ausgestrahlt wird,
**dadurch gekennzeichnet, dass** die Verdunklungsvorrichtung (180) enthält:
einen Verdunklungsabschnitt (182), der zwischen der Lichtquelle (171, 172) und der Lichtmodulationsvorrichtung (190) vorgesehen ist, wobei das Licht von der Lichtquelle (171, 172) auf den Verdunklungsabschnitt (182) fallen gelassen wird; und
einen Öffnungs- und Schließabschnitt (184), der zwischen dem Verdunklungsabschnitt (182) und der Lichtmodulationsvorrichtung (190) vorgesehen ist und so vorgesehen ist, dass das Licht, das vom Verdunklungsabschnitt (182) eingestellt wird, auf den Öffnungs- und Schließabschnitt (184) fallen gelassen wird, und
wobei, wenn die Lichtmenge des Beleuchtungslichts minimiert wird, die Beleuchtungsvorrichtung (170) den Verdunklungsabschnitt (182) so antreibt, dass eine Lichtmenge, die durch den Verdunklungsabschnitt (182) geht, abnimmt, so dass sie gleich oder kleiner als ein vorbestimmter Wert ist, und den Öffnungs- und Schließabschnitt (184) schließt.

2. Projektor (100) nach Anspruch 1, des Weiteren umfassend einen zweiten Temperaturmessabschnitt (151), der eine zweite Temperatur misst, die die Temperatur an einer Außenseite der Lichtmodulationsvorrichtung (190) ist wobei
wenn die erste Temperatur niedriger als die zweite Temperatur ist, die Kühlvorrichtung (130) die Lichtmodulationsvorrichtung (190) so kühlt, dass die erste Temperatur auf gleich oder höher als die zweite Temperatur steigt.

3. Projektor (100) nach Anspruch 1 oder Anspruch 2, wobei die Kühlvorrichtung (130) die Kühlung der Lichtmodulationsvorrichtung (190) unterdrückt, wenn die Lichtmenge des Beleuchtungslichts ein Minimum ist.

4. Projektor (100) nach einem der Ansprüche 1 bis 3, wobei die die Kühlvorrichtung (130) die Kühlung der Lichtmodulationsvorrichtung (190) unterdrückt, wenn eine Anweisung für ein Bildausschalten empfangen wird.

5. Projektor (100) nach Anspruch 4, wobei die Kühlvorrichtung (130) die Unterdrückung der Kühlung der Lichtmodulationsvorrichtung (190) aufhebt, wenn die Anweisung für ein Bildausschalten annulliert wird.

6. Steuerverfahren für einen Projektor (100), enthaltend eine Beleuchtungsvorrichtung (170), eine Lichtmodulationsvorrichtung (190) und eine Kühlvorrichtung (130),
wobei die Beleuchtungsvorrichtung (170) des Projektors (100) enthält:
eine Lichtquelle (171, 172), die Licht ausstrahlt; und
eine Verdunklungsvorrichtung (180), die als Beleuchtungslicht Licht ausstrahlt, das durch Einstellen einer Menge des Lichts erhalten wird, das von der Lichtquelle (171, 172) ausgestrahlt wird,
wobei die Verdunklungsvorrichtung (180) enthält:
einen Verdunklungsabschnitt (182), der zwischen der Lichtquelle (171, 172) und der Lichtmodulationsvorrichtung (190) vorgesehen ist, wobei das Licht von der Lichtquelle (171, 172) auf den Verdunklungsabschnitt (182) fallen gelassen wird; und
einen Öffnungs- und Schließabschnitt (184), der zwischen dem Verdunklungsabschnitt (182) und der Lichtmodulationsvorrichtung (190) vorgesehen ist und so vorgesehen ist, dass das Licht, das vom Verdunklungsabschnitt (182) eingestellt wird, auf den Öffnungs- und Schließabschnitt (184) fallen gelassen wird,
wobei das Steuerverfahren umfasst:
Bewirken, dass die Beleuchtungsvorrichtung (170) Beleuchtungslicht ausstrahlt;
Bewirken, dass die Lichtmodulationsvorrichtung (190) das Beleuchtungslicht auf der Basis eines Eingangsbildsignals moduliert;
Bewirken, dass die Kühlvorrichtung (130) die Lichtmodulationsvorrichtung (190) gemäß einer Lichtmenge des Beleuchtungslichts kühlt;
Messen einer ersten Temperatur, die die Temperatur der Lichtmodulationsvorrichtung (190) ist;
wenn die erste Temperatur niedriger als eine Referenztemperatur ist, bei der eine Feuchtigkeitskondensation eintritt, Bewirken, dass die Kühlvorrichtung (130) die Lichtmodulationsvorrichtung (190) so kühlt, dass die erste Temperatur so steigt, dass sie gleich oder höher als die Referenztemperatur ist; und **gekennzeichnet durch**
Antreiben des Verdunklungsabschnitts (182), wenn die Lichtmenge des Beleuchtungslichts minimiert wird, so, dass eine Lichtmenge, die **durch** den Verdunklungsabschnitt (182) geht, abnimmt, so dass sie gleich oder kleiner als ein vorbestimmter Wert ist, Schließen des Öffnungs- und Schließabschnitts (184).

7. Steuerverfahren nach Anspruch 6, des Weiteren umfassend:
Messen einer zweiten Temperatur, die die Temperatur an einer Außenseite der Lichtmodulationsvorrichtung (190) ist; und
wenn die erste Temperatur niedriger als die zweite Temperatur ist, Bewirken, dass die Kühlvorrichtung (130) die Lichtmodulationsvorrichtung (190) so kühlt, dass die erste Temperatur so steigt, dass sie gleich oder höher als die zweite Temperatur ist.

8. Steuerverfahren nach Anspruch 6 oder Anspruch 7, des Weiteren umfassend das Bewirken, dass die Kühlvorrichtung (130) die Kühlung der Lichtmodulationsvorrichtung (190) unterdrückt, wenn die Lichtmenge des Beleuchtungslichts minimal ist.

9. Steuerverfahren nach einem der Ansprüche 6 bis 8, des Weiteren umfassend das Bewirken, dass die Kühlvorrichtung (130) die Kühlung der Lichtmodulationsvorrichtung (190) unterdrückt, wenn eine Anweisung für ein Bildausschalten empfangen wird.

10. Steuerverfahren nach Anspruch 9, des Weiteren umfassend das Bewirken, dass die Kühlvorrichtung (130) die Unterdrückung der Kühlung der Lichtmodulationsvorrichtung (190) aufhebt, wenn die Anweisung für ein Bildausschalten annulliert wird.

## Revendications

1. Projecteur (100) comprenant :
un dispositif d'illumination (170) qui émet de la lumière d'illumination ;
un dispositif de modulation de lumière (190) qui module la lumière d'illumination sur la base d'un signal d'image d'entrée ;
un dispositif de refroidissement (130) qui refroidit le dispositif de modulation de lumière (190) en fonction d'une quantité de lumière de la lumière d'illumination ; et
une première section de mesure de température (150) qui mesure une première température, laquelle est la température du dispositif de modulation de lumière (190),
dans lequel, lorsque la première température est plus basse qu'une température de référence à laquelle il y a une condensation d'humidité, le dispositif de refroidissement (130) refroidit le dispositif de modulation de lumière (190) de manière à ce que la première température s'élève de manière à être supérieure ou égale à la température de référence,
dans lequel le dispositif d'illumination (170) comprend :
une source lumineuse (171, 172) qui émet de la lumière ; et
un dispositif variateur d'intensité (180) qui émet, en guise de lumière d'illumination, de la lumière obtenue en ajustant une quantité de lumière émise par la source lumineuse (171, 172),
**caractérisé en ce que** le dispositif variateur d'intensité (180) comprend :
une section de variation d'intensité (182) fournie entre la source lumineuse (171, 172) et le dispositif de modulation de lumière (190), la lumière provenant de la source lumineuse (171, 172) étant rendue incidente sur la section de variation d'intensité (182) ; et
une section d'ouverture et de fermeture (184) fournie entre la section de variation d'intensité (182) et le dispositif de modulation de lumière (190) et fournie de manière à ce que la lumière ajustée par la section de variation d'intensité (182) devienne incidente sur la section d'ouverture et de fermeture (184), et
dans lequel, lorsque la quantité de lumière de la lumière d'illumination est minimisée, le dispositif d'illumination (170) commande la section de variation d'intensité (182) de manière à ce qu'une quantité de lumière passant à travers la section de variation d'intensité (182) diminue de manière à être inférieure ou égale à une valeur prédéterminée et ferme la section d'ouverture et de fermeture (184).

2. Projecteur (100) selon la revendication 1, comprenant en outre une seconde section de mesure de température (151) qui mesure une seconde température, laquelle est la température à l'extérieur du dispositif de modulation de lumière (190), dans lequel
lorsque la première température est plus basse que la seconde température, le dispositif de refroidissement (130) refroidit le dispositif de modulation de lumière (190) de manière à ce que la première température s'élève de manière à être supérieure ou égale à la seconde température.

3. Projecteur (100) selon la revendication 1 ou la revendication 2, dans lequel le dispositif de refroidissement (130) supprime le refroidissement du dispositif de modulation de lumière (190) lorsque la quantité de lumière de la lumière d'illumination est d'un minimum.

4. Projecteur (100) selon l'une quelconque des revendications 1 à 3, dans lequel le dispositif de refroidissement (130) supprime le refroidissement du dispositif de modulation de lumière (190) lorsqu'une instruction d'image coupée est reçue.

5. Projecteur (100) selon la revendication 4, dans lequel le dispositif de refroidissement (130) arrête la suppression du refroidissement du dispositif de modulation de lumière (190) lorsque l'instruction pour une image coupée est annulée.

6. Procédé de contrôle pour un projecteur (100) comprenant un dispositif d'illumination (170), un dispositif de modulation de lumière (190) et un dispositif de refroidissement (130),
dans lequel le dispositif d'illumination (170) du projecteur (100) comprend :
une source lumineuse (171, 172) qui émet de la lumière ; et
un dispositif variateur d'intensité (180) qui émet, en guise de lumière d'illumination, de la lumière obtenue en ajustant une quantité de la lumière émise par la source lumineuse (171, 172),
dans lequel le dispositif variateur d'intensité (180) comprend :
une section de variation d'intensité (182) fournie entre la source lumineuse (171, 172) et le dispositif de modulation de lumière (190), la lumière provenant de la source lumineuse (171, 172) étant rendue incidente sur la section de variation d'intensité (182) ; et
une section d'ouverture et de fermeture (184) fournie entre la section de variation d'intensité (182) et le dispositif de modulation de lumière (190), et fournie de manière à ce que la lumière ajustée par la section de variation d'intensité (182) devienne incidente sur la section d'ouverture et de fermeture (184),
le procédé de contrôle comprenant :
faire en sorte que le dispositif d'illumination (170) émette de la lumière d'illumination ;
faire en sorte que le dispositif de modulation de lumière (190) module la lumière d'illumination sur la base d'un signal d'image d'entrée ;
faire en sorte que le dispositif de refroidissement (130) refroidisse le dispositif de modulation de lumière (190) en fonction d'une quantité de lumière de la lumière d'illumination ;
mesure d'une première température, laquelle est la température du dispositif de modulation de lumière (190) ;
lorsque la première température est inférieure à une température de référence à laquelle il y a une condensation d'humidité, faire en sorte que le dispositif de refroidissement (130) refroidisse le dispositif de modulation de lumière (190) de manière à ce que la première température s'élève de manière à être supérieure ou égale à la température de référence ; et **caractérisé par**
lorsque la quantité de lumière de la lumière d'illumination est minimisée, commande de la section de variation d'intensité (182) de manière à ce qu'une quantité de lumière passant à travers la section de variation d'intensité (182) diminue de manière à être inférieure ou égale à une valeur prédéterminée et fermeture de la section d'ouverture et de fermeture (184).

7. Procédé de contrôle selon la revendication 6, comprenant par ailleurs :
mesure d'une seconde température, laquelle est la température à l'extérieur du dispositif de modulation de lumière (190) ; et
lorsque la première température est inférieure à la seconde température, faire en sorte que le dispositif de refroidissement (130) refroidisse le dispositif de modulation de lumière (190) de manière à ce que la première température s'élève de manière à être supérieure ou égale à la seconde température.

8. Procédé de contrôle selon la revendication 6 ou la revendication 7, comprenant en outre le fait de faire en sorte que le dispositif de refroidissement (130) supprime le refroidissement du dispositif de modulation de lumière (190) lorsque la quantité de lumière de la lumière d'illumination est d'un minimum.

9. Procédé de contrôle selon l'une quelconque des revendications 6 à 8, comprenant en outre le fait de faire en sorte que le dispositif de refroidissement (130) supprime le refroidissement du dispositif de modulation de lumière (190) lorsqu'une instruction d'image coupée est reçue.

10. Procédé de contrôle selon la revendication 9, comprenant en outre le fait de faire en sorte que le dispositif de refroidissement (130) arrête la suppression du refroidissement du dispositif de modulation de lumière (190) lorsque l'instruction pour une image coupée est annulée.
